# EUROPEAN PATENT APPLICATION

(11) **EP 4 492 675 A1**
(43) Date of publication of application: **15.01.2025**
(21) Application number: 22935297.6
(22) Date of filing: 30.03.2022
(51) Int. Cl.: H02P 29/032, H02P 9/00

(54) **CONTROL DEVICE AND VEHICLE**

(71) Applicant: HONDA MOTOR CO., LTD., Minato-ku Tokyo 107-8556 (JP)
(72) Inventor: SHOKAKU, Isao, Wako-shi, Saitama 351-0193 (JP); KANBE, Yuta, Wako-shi, Saitama 351-0193 (JP); KIMURA, Tsukasa, Wako-shi, Saitama 351-0193 (JP); MORI, Masahiro, Wako-shi, Saitama 351-0193 (JP)
(74) Representative: Kiwit, Benedikt
(86) International application number: PCT/JP2022/016124
(87) International publication number: WO 2023/188152

(57) **Abstract**

A control device characterized by comprising a first control unit that performs drive control of an electric motor on the basis of first electric power, and a second control unit that performs predetermined drive control on the basis of second electric power smaller than the first electric power, wherein the first control unit performs the drive control of the electric motor by receiving the first electric power and the second electric power, and in a case of receiving an induced voltage of the electric motor while the first electric power and the second electric power are not received, performs protection processing for protecting a target from the induced voltage on the basis of the induced voltage.

## Description

### TECHNICAL FIELD

The present invention mainly relates to an in-vehicle control device.

### BACKGROUND ART

Among electric vehicles including an electric motor and a control device for performing drive control of the electric motor, there is an electric vehicle configured to protect an in-vehicle component from an induced voltage of the electric motor (refer to Patent Literature 1).

### CITATION LIST

### PATENT LITERATURE

PTL 1: Japanese Patent Laid-Open No. 2014-183702

### SUMMARY OF INVENTION

### TECHNICAL PROBLEM

It is conceivable that an induced voltage of an electric motor is generated even in a case where an electric vehicle is not in a starting state. Therefore, it can be required to more appropriately protect an in-vehicle component from such induced voltage and improve reliability of the electric vehicle.

An illustrative object of the present invention is to improve the reliability of the electric vehicle.

### SOLUTION TO PROBLEM

A first aspect of the present invention relates to a control device, characterized by comprising:
a first control unit that performs drive control of an electric motor on the basis of first electric power; and
a second control unit that performs predetermined drive control on the basis of second electric power smaller than the first electric power, wherein
the first control unit
   performs the drive control of the electric motor by receiving the first electric power and the second electric power, and
   in a case of receiving an induced voltage of the electric motor while the first electric power and the second electric power are not received, performs protection processing for protecting a target from the induced voltage on the basis of the induced voltage.

### ADVANTAGEOUS EFFECTS OF INVENTION

According to the present invention, reliability of the electric vehicle can be improved.

### BRIEF DESCRIPTION OF DRAWINGS

FIG. 1 is a schematic diagram of a vehicle.
FIG. 2 is a system block diagram illustrating a power system of the vehicle.
FIG. 3 is a system block diagram illustrating a power system of the vehicle.
FIG. 4 is a flowchart illustrating content of processing of an in-vehicle control device.
FIG. 5 is a timing chart illustrating content of processing of an in-vehicle control device.
FIG. 6 is a timing chart illustrating content of processing of an in-vehicle control device.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

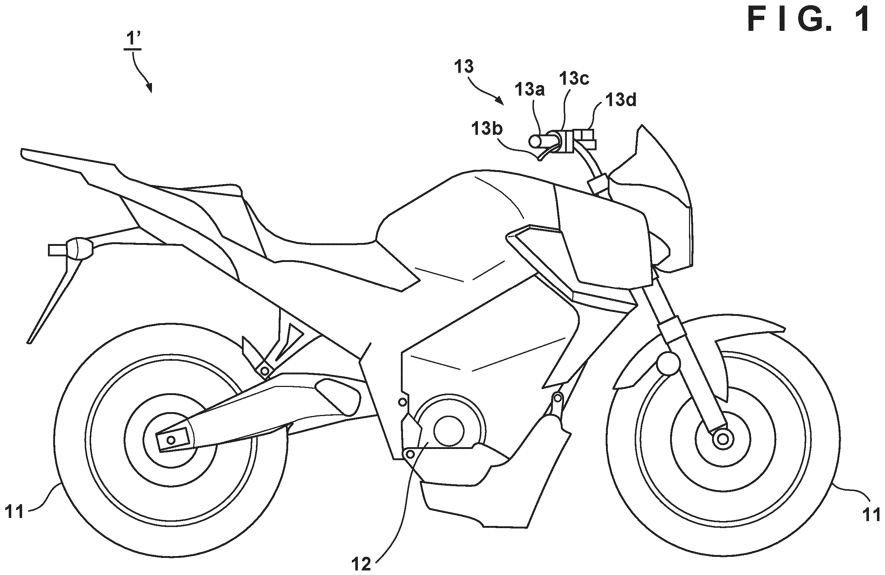

FIG. 1 is a schematic diagram of a vehicle 1' as a reference example. The vehicle 1' includes a wheel 11, an electric motor 12, and an operation unit 13. In this example, the vehicle 1' is a two-wheeled vehicle including a front wheel and a rear wheel as the wheels 11, but this may be a three-wheeled vehicle or a four-wheeled vehicle, and the number of wheels is not limited to this example. The vehicle 1' is a straddle type vehicle, but is not limited thereto.

The vehicle 1' is an electric vehicle using the electric motor 12 as a power source. As the electric motor 12, a three-phase motor (three-phase AC motor) can be typically used, but another motor may be used. Power of the electric motor 12 can be typically transmitted to the rear wheel, but may be transmitted to the front wheel.

In this example, the operation unit 13 includes an acceleration operator 13a, a brake operator 13b, a steering operator 13c, and a main switch 13d. The acceleration operator 13a is used to start and accelerate the vehicle 1'. The brake operator 13b is used to decelerate and stop the vehicle 1'. The steering operator 13c is used to change a travel direction of the vehicle 1'. A known configuration such as a lever type, a pedal type, and a handle type may be adopted as the operators 13a to 13c. A user (driver or rider) can perform driving operations such as acceleration, deceleration, and steering of the vehicle 1' using the operators 13a to 13c.

The main switch 13d is used to start the vehicle 1', and can take an on state (a state in which the vehicle 1' is allowed to start) or an off state (a state in which the start of the vehicle 1' is restricted), that is, used to switch between a starting state and a stopped state of the vehicle 1'. The starting state of the vehicle 1' refers to a state in which electric power is supplied to the electric motor 12 and an element for driving the same (mainly an in-vehicle component or a part thereof) and drive control of the electric motor 12 is possible, and is mainly a state in which a user can execute the driving operation of the vehicle 1' using the acceleration operator 13a. The stopped state of the vehicle 1' is a state in which the driving operation using the acceleration operator 13a by the user is restricted, and at that time, electric power can be supplied to the electric motor 12 and the element for driving the same, but it is possible that the electric power is not substantially supplied.

As the main switch 13d, a main switch using an ignition key can be typically used, but various types of main switches can be used. From this viewpoint, the main switch 13d may be expressed as a vehicle start unit or simply a starter.

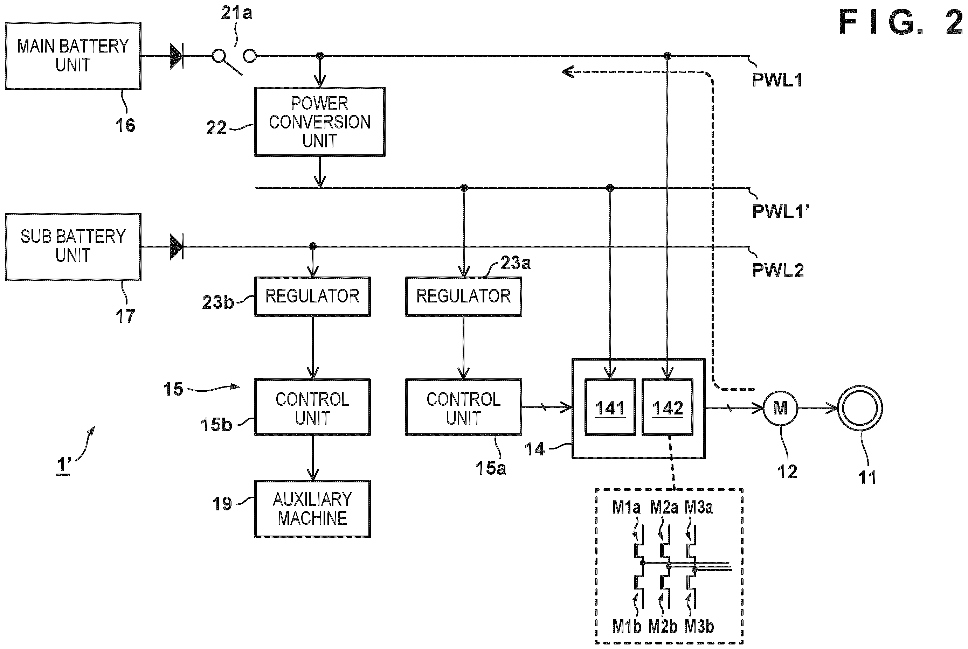

FIG. 2 is a system block diagram illustrating a power system of the vehicle 1'. The vehicle 1' further includes a motor driver 14, a control device 15, a main battery unit 16, and a sub battery unit 17.

The motor driver 14 is configured to be able to implement the drive control of the electric motor 12. In this example in which the three-phase motor is used as the electric motor 12, a rotor rotates when a current is supplied to each of three windings (U-phase line, V-phase line, and R-phase line) forming a stator coil thereof. The motor driver 14 can individually control current values of the three windings, thereby making a rotation mode of the rotor desirable.

In this example, the motor driver 14 includes a pre-driver 141 that operates on the basis of electric power PW1' to be described later and an output driver 142 that operates on the basis of electric power PW1 to be described later. The pre-driver 141 drives the output driver 142 on the basis of a control signal from a control unit 15a to be described later. The output driver 142 includes transistors M1a, M1b, M2a, M2b, M3a, and M3b. The transistors M1a and M1b are connected in series, and a node therebetween is connected to a first winding (for example, the U-phase line). The transistors M2a and M2b are connected in series, and a node therebetween is connected to a second winding (for example, the V-phase line). The transistors M3a and M3b are connected in series, and a node therebetween is connected to a third winding (for example, a W-phase line). Note that, a known high withstand voltage transistor such as a bipolar transistor or a double diffused metal oxide semiconductor (DMOS) transistor may be used as the transistor M1a and the like.

The control device 15 includes a first control unit 15a and a second control unit 15b. The control unit 15a can individually control the current values of the three windings by individually controlling the transistor M1a and the like of the motor driver 14, thereby making a rotation mode of the rotor desirable.

The control unit 15b performs drive control of an auxiliary machine 19 for bringing the vehicle 1' into the starting state. A concept of the auxiliary machine 19 can include elements that support travel of the vehicle 1', such as a measuring instrument and a sensor, in addition to elements directly related to bringing the vehicle 1' into the starting state and/or appropriately maintaining the starting state, such as a cooling pump. From the viewpoint of diversification of functions, the control unit 15b may be expressed as a functional unit.

The main battery unit 16 generates electric power PW1 used for drive control of the electric motor 12, the motor driver 14, and the control unit 15a. The main battery unit 16 outputs a relatively high voltage such as 200 V (volt), for example. A lithium-ion battery and the like can be typically used as the main battery unit 16.

The sub battery unit 17 generates electric power PW2 used for drive control of the control unit 15b. The electric power PW2 is smaller than the electric power PW1. The sub battery unit 17 outputs a relatively low voltage such as 12 V, for example. A lead battery and the like can be typically used as the sub battery unit 17.

In this respect, among the above-described elements included in the vehicle 1', elements directly related to a power source and drive control thereof, in this example, the electric motor 12, the motor driver 14, and the control unit 15a can be classified as high power system elements. Other elements different from the high power system elements, in this example, the auxiliary machine 19 and the control unit 15b can be classified as low power system elements. In contrast, the control units 15a and 15b including different power systems can be mounted on the same substrate or can be implemented by a single semiconductor device, and an object thereof is to be able to appropriately implement control of an entire system. Additionally, the motor driver 14 may be mounted on the same substrate together with the control device 15 or may be configured as a part of the control device 15.

Note that, both the main battery unit 16 and the sub battery unit 17 output a direct current (DC) voltage, the electric power PW1 and the electric power PW2 may be restated as voltages PW1 and PW2, respectively. The main battery unit 16 and the sub battery unit 17 may be expressed as a first battery unit 16 and a second battery unit 17, respectively, or may be simply expressed as battery units 16 and 17.

In this example, the vehicle 1' further includes a switch element 21a, a power conversion unit 22, and regulators 23a and 23b.

The switch element 21a is arranged between the main battery unit 16 and a power line PWL1, and can control whether to output the electric power PW1 of the main battery unit 16 to the power line PWL1. The main switch 13d can control whether to output the electric power PW2 of the sub battery unit 17 to the power line PWL2. In this example, in response to the main switch 13d being turned on, the switch element 21a is turned on, and the electric power PW1 is supplied to the element via the power line PWL1. At substantially the same time, the electric power PW2 is supplied to the element via the power line PWL2.

The power conversion unit 22 is arranged between the power line PWL1 and the power line PWL1' for transmitting the electric power PW1', and converts the electric power PW1 into the electric power PW1' corresponding to the electric motor 12, the motor driver 14, and the control unit 15a. In this example, a known voltage conversion unit such as a DC-DC converter may be used as the power conversion unit 22.

The regulator 23a is arranged between the power line PWL1' and the control unit 15a, restricts the electric power PW1' of the power line PWL1', and supplies a predetermined constant voltage (for example, 15 V) to the control unit 15a. The regulator 23b is arranged between the power line PWL2 and the control unit 15b, restricts the electric power PW2 of the power line PWL2, and supplies a predetermined constant voltage (for example, 5 V) to the control unit 15b.

In short, in a state in which voltages independent from each other are supplied to the control units 15a and 15b, the control unit 15a controls the motor driver 14 and the control unit 15b controls the auxiliary machine 19. With such a configuration, the drive control of the electric motor 12 becomes possible, and the vehicle 1' can be brought into the starting state.

Note that, all or a part of the switch element 21a, the power conversion unit 22, and the regulators 23a and 23b may be mounted on the same substrate together with the control device 15, or may be configured as a part of the control device 15.

In the example of FIG. 2, the wheel 11 is directly connected to a rotation shaft of the electric motor 12, but as another example, a power transmission mechanism may be provided in a path between the electric motor 12 and the wheel 11. The power transmission mechanism can include a known transmission such as a continuously variable transmission (CVT). As still another example, the power transmission mechanism may further include a clutch mechanism. In this case, the power of the electric motor 12 is transmitted to the wheel 11 while the clutch mechanism is in an engaged state, and the power transmission path from the electric motor 12 to the wheel 11 is interrupted and the power of the electric motor 12 is not transmitted to the wheel 11 while the clutch mechanism is in a disengaged state.

Note that, in a system configuration of FIG. 2, the control units 15a and 15b implement corresponding functions on the basis of the electric power of the main battery unit 16 and the sub battery unit 17, which are power sources independent from each other, and bring the vehicle 1' into the starting state. In contrast, while the vehicle 1' is in the stopped state, the control units 15a and 15b do not receive the electric power of the main battery unit 16 and the sub battery unit 17.

However, the vehicle 1' is often pushed and pulled (handled) by the user in the stopped state, so that it is conceivable that an unexpected induced voltage is generated in the electric motor 12 and the induced voltage is applied to the control device 15 via the power line PWL1 as indicated by a broken arrow in FIG. 2. This is likely to occur, for example, when the vehicle 1' is handled on a downhill, and especially remarkable in a case where the vehicle 1' is the two-wheeled vehicle or the straddle type vehicle because the vehicle 1' is often handled. Therefore, it can be required to protect the control device 15 from such induced voltage.

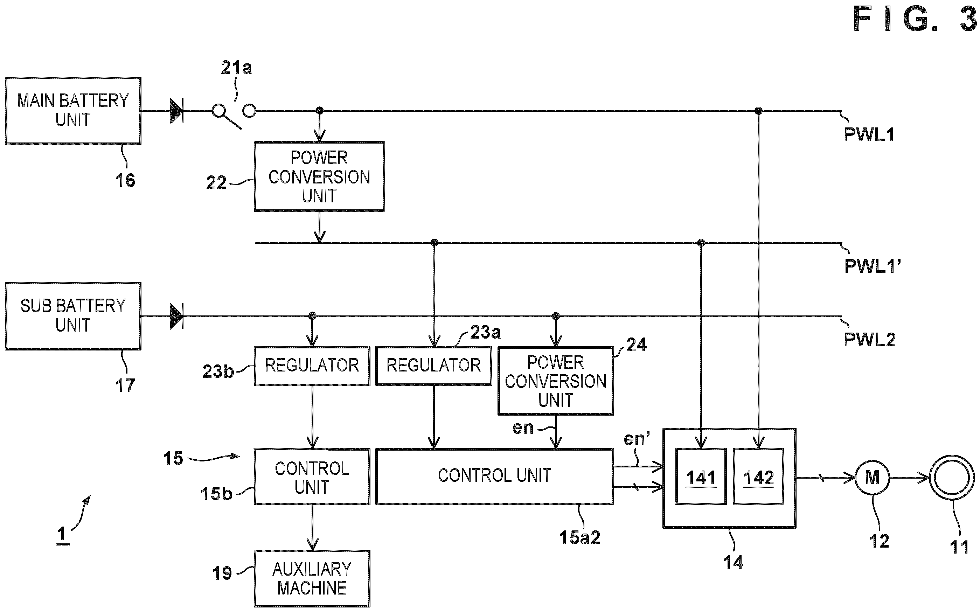

FIG. 3 is a system block diagram illustrating a power system of the vehicle 1 according to the embodiment. The vehicle 1 includes a control unit 15a2 instead of the control unit 15a, and further includes a power conversion unit 24. The control unit 15a2 is configured to be able to receive an enable signal en, and can implement a control function of the motor driver 14 (a function similar to that of the control unit 15a) in a state of receiving the enable signal en. In this embodiment, an output voltage of the power conversion unit 24 is used as the enable signal en. The power conversion unit 24 is arranged between the power line PWL2 and the control unit 15a2, converts the electric power PW2 of the power line PWL2, and supplies a corresponding voltage to the control unit 15a2. That is, the control unit 15a2 can control the motor driver 14 on the basis of the output voltage of the regulator 23a while receiving the output voltage of the power conversion unit 24.

In contrast, in a case where the vehicle 1 is in the stopped state, the electric power PW2 is not supplied to the power line PWL2, so that the power conversion unit 24 does not supply the corresponding voltage to the control unit 15a2. That is, the control unit 15a2 does not receive the output voltage of the power conversion unit 24 as the enable signal en. Therefore, the control function of the motor driver 14 is restricted.

In a case where an induced voltage is generated in the electric motor 12 in such a state, there is a possibility that the induced voltage is propagated to the power line PWL1' and applied to the control unit 15a2 via the regulator 23a. Then, since the electric power PW2 is not supplied to the power line PWL2 and the power conversion unit 24 does not supply the corresponding voltage to the control unit 15a2, the control unit 15a2 does not receive the output voltage of the power conversion unit 24 as the enable signal en. Therefore, in a case where the control unit 15a2 does not receive the enable signal en, this does not implement the control function of the motor driver 14, but performs protection processing to be described later using the induced voltage received via the power line PWL1'.

The enable signal en may also be provided to the motor driver 14, which makes it possible to restrict the possibility of the driving control of the motor driver 14. In this case, another enable signal equivalent to the enable signal en may be provided from the control unit 15a2 to the motor driver 14, or the enable signal en itself may be provided to the motor driver 14. In this embodiment, an enable signal en' is provided from the control unit 15a2 to the motor driver 14.

Note that, as the power conversion unit 24, an isolated DC-DC converter or the like in which a power system is separated between the power lines PW1' and PW2 is preferably used. In contrast, a non-isolated DC-DC converter may be used for the power conversion unit 22, thereby making it possible to suppress an increase in cost.

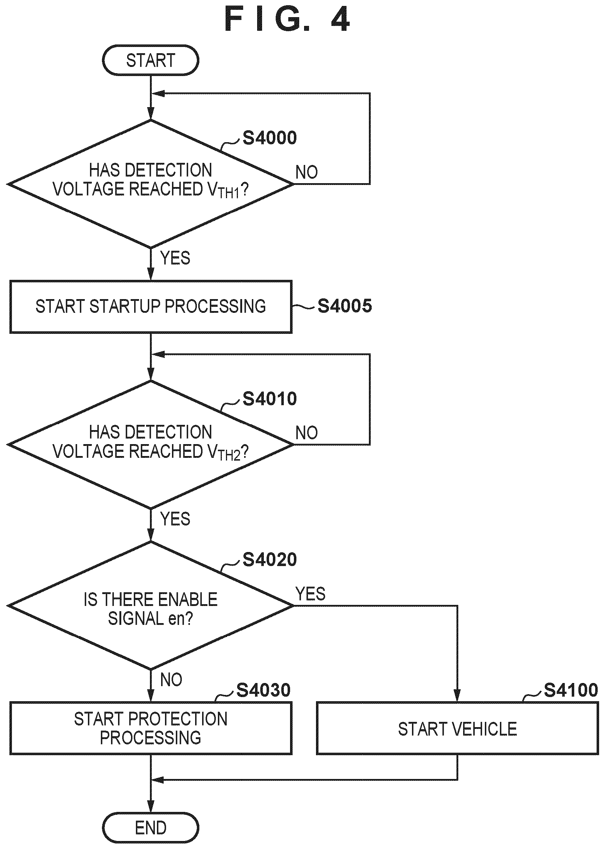

FIG. 4 is an example of a flowchart illustrating content of processing executed by the control unit 15a2. An outline of this flowchart is that startup processing is performed on the basis of the voltage received from the power line PWL1' via the regulator 23a, and the content of the processing is changed on the basis of presence or absence of the enable signal en. All the individual steps executed in this flowchart can be implemented with relatively small electric power, and can also be implemented on the basis of the above-described induced voltage.

At step S4000 (hereinafter, simply referred to as S4000, and the same applies to other steps to be described below), the startup processing is started at S4005 in response to a fact that the detected voltage reaches a first threshold V_{TH1}. The startup processing includes operation check of elements that implement the individual functions of the control unit 15a2, for example, evaluation of a response after outputting a predetermined test pattern to the individual elements, thereby making it possible to determine whether the drive control of the electric motor 12 is possible. The detection voltage may be a voltage received from the power line PWL1' via the regulator 23a, but may alternatively be another voltage based on the power line PWL1 or PWL1' itself or a voltage value thereof. Moreover, since it is sufficient to implement the startup processing, it can be said that the threshold V_{TH1} may be set to a power value of the power line PWL1' that enables the control unit 15a2 to sufficiently execute the startup processing or a value corresponding thereto.

At S4010, in response to the detection voltage reaching a threshold V_{TH2}, the presence or absence of the enable signal en (herein, the output voltage of the power conversion unit 24) is determined at S4020. It is assumed that the threshold V_{TH2} is larger than the threshold V_{TH1}. In a case where there is the enable signal en, the processing proceeds to S4100, and otherwise, the processing proceeds to S4030.

At S4030, since there is no enable signal en, it is assumed that the startup processing at S4000 is performed on the basis of the induced voltage of the electric motor 12, and the protection processing for protecting a target from the induced voltage is started. Note that, this protection processing can be performed intermittently or continuously. Thereafter, this flowchart is ended in response to completion of the protection processing.

From this, it can be said that the threshold V_{TH2} may be set to a value larger than the threshold V_{TH1}, a power value of the power line PWL1' that makes it possible to execute the protection processing or a value corresponding thereto.

Note that, at S4100, since the main switch is in an on state, it is assumed that the startup processing at S4000 is performed on the basis of the electric power of the main battery unit 16, and the vehicle 1 is brought into the starting state.

According to such control, the control unit 15a2 receives the electric power PW2 and the electric power PW1' to bring the vehicle 1 into the starting state, and performs the drive control of the electric motor 12. In contrast, in a case where an induced voltage of the electric motor 12 is received while the vehicle 1 is in the stopped state, that is, while the electric power PW2 and the electric power PW1' are not received, the control unit 15a2 can perform the protection processing on the basis of the induced voltage.

As an example of the protection processing, phase voltages of the stator coil of the electric motor 12 are made equal to each other. For example, in this embodiment in which the three-phase motor is used as the electric motor 12, it is sufficient that the voltages of the three windings (U-phase line, V-phase line, and R-phase line) are equal to each other or they may be short-circuited to each other. This can be implemented, for example, by bringing the transistors M1a, M2a, and M3a into a non-conductive state (or conductive state) and bringing the transistors M1b, M2b, and M3b into a conductive state (or non-conductive state) in the motor driver 14. Such protection processing can be expressed as three-phase short-circuit processing or the like.

According to such protection processing, for example, it is possible to prevent a situation in which an unexpected voltage caused by the induced voltage is generated in the control unit 15a2 and/or the motor driver 14 and the element is electrically broken. In the protection processing, the transistor M1a and the like may be gently switched between the conduction state and the non-conduction state in such a manner that an unexpected current does not occur in the control unit 15a2 and/or the motor driver 14.

Note that, as another example of the protection processing, switching of the transistor M1a and the like may be performed in an operation region in which power efficiency of the motor 12 is relatively low, so that the phase voltages of the stator coil can be made equal relatively easily. Moreover, the switching of the transistor M1a and the like may be performed by increasing a drain current thereof.

For example, in a case where each of the control units 15a2 and 15b includes a CPU and a memory, the content of the above-described flowchart is performed by the CPU reading a predetermined program and executing the program while developing the program on the memory. The control units 15a2 and/or 15b may be formed of an application specific integrated circuit (ASIC), that is, the function of the control device 15 can be implemented by both hardware and software.

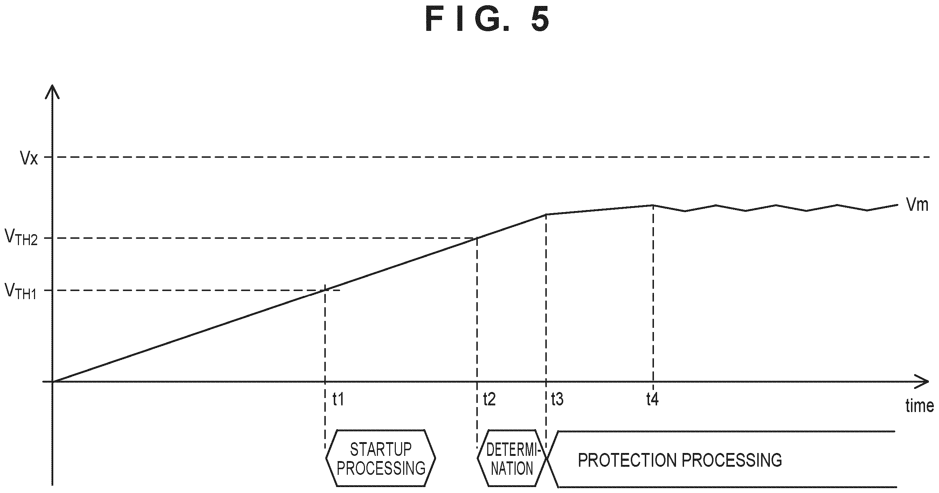

FIG. 5 is an example of a timing chart illustrating content of processing executed by the control device 15. Herein, an example of a case where an induced voltage Vm is generated in the electric motor 12 while the vehicle 1 is in a stopped state will be considered. The horizontal axis represents a time axis, and the vertical axis represents (an absolute value of) the induced voltage Vm.

At time t1, Vm ≥ V_{TH1} holds, and the startup processing is started. At time t2, Vm ≥ V_{TH2} holds, and the presence or absence of the enable signal en is determined. Herein, since the vehicle 1 is in the stopped state, the enable signal en is not generated. Therefore, at time t3, the protection processing is started on the basis of the induced voltage Vm. A time at which the protection processing is completed is time t4. In this example, it is assumed that the protection processing is intermittently repeated after time t4.

By performing such processing, it is possible to prevent the induced voltage Vm from exceeding a withstand voltage Vx of the target. Note that, the withstand voltage Vx may be set as a withstand voltage (for example, a breakdown voltage of a bipolar transistor and a voltage at which dielectric breakdown occurs in a DMOS transistor) of a high withstand voltage transistor that can be provided in the control unit 15a2 and/or the motor driver 14.

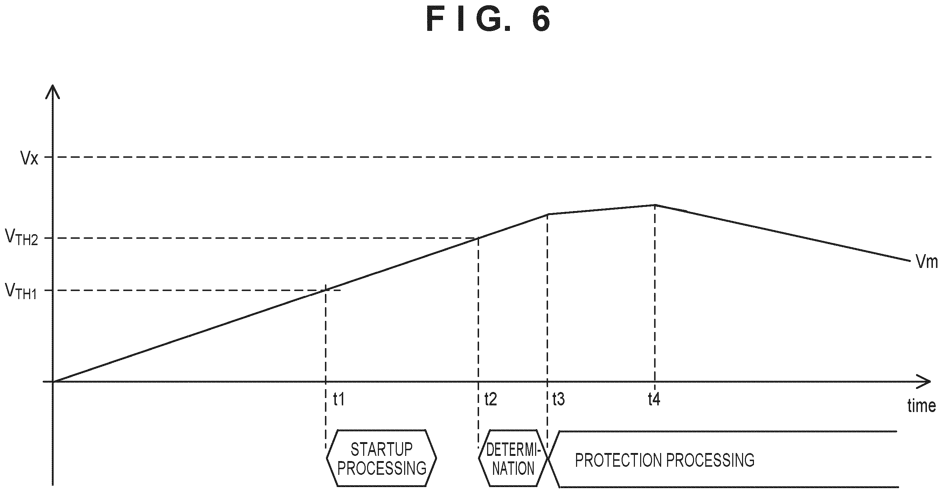

In the example of FIG. 5, after time t4, the protection processing is intermittently repeated so that the induced voltage Vm does not exceed the withstand voltage Vx, but the protection processing may be continued. For example, as illustrated in FIG. 6, by continuing the protection processing also after time t4, the induced voltage Vm that can be generated is reduced, and the induced voltage Vm can be made substantially zero or close to zero.

In addition, in the embodiment, an example in which the enable signals en and en' are used is described, but as another embodiment, polarity of the signal may be reversed, and a disable signal of this/them may be used. In this case, the disable signal corresponds to a fact that the control unit 15a2 does not receive the electric power PW2.

In the descriptions heretofore, in order to facilitate the understanding, each element is indicated with a name related to its functional aspect; however, each element is not limited to an element including the content described in the embodiment as its main function, and may auxiliarily include the same. Therefore, each element is not strictly limited to the expression, and the expression can be replaced with a similar expression. For the similar purpose, the expression "apparatus" may be replaced with "unit", "component, piece", "member", "structure", "assembly" and the like, or may be omitted.

In the descriptions heretofore, in order to facilitate the understanding, each element is indicated with a name related to its functional aspect; however, each element is not limited to an element including the content described in the embodiment as its main function, and may auxiliarily include the same. For example, while the vehicle 1 is illustrated as a typical example in the present specification, it can be said that the content of the embodiment is also applicable to objects not including wheels (vessels and the like), that is, applicable to various movable bodies.

The features of the above-described embodiment can be summarized as follows.

The first aspect relates to a control device (15), characterized by comprising:
a first control unit (15a2) that performs drive control of an electric motor (12) on the basis of first electric power (PW1, PW1'); and
a second control unit (15b) that performs predetermined drive control on the basis of second electric power (PW2) smaller than the first electric power, wherein
the first control unit
   performs the drive control of the electric motor by receiving the first electric power and the second electric power, and
   in a case of receiving an induced voltage (Vm) of the electric motor while the first electric power and the second electric power are not received, performs protection processing (S4030) for protecting a target from the induced voltage on the basis of the induced voltage.

As a result, in a case of receiving the induced voltage of the electric motor while the vehicle is in the stopped state, a predetermined target can be protected by performing the protection processing on the basis of the induced voltage, thereby improving reliability of the vehicle.

In the second aspect, the first control unit executes startup processing (S4000) on the basis of the induced voltage and performs the protection processing on the basis of a result of the startup processing.

As a result, it is possible to check the operation of the element that implements the function of the first control unit.

In the third aspect, the startup processing includes determining whether the drive control of the electric motor is possible.

As a result, a second aspect can be appropriately implemented.

In the fourth aspect, the first control unit starts the startup processing in response to an absolute value of the induced voltage reaching a first threshold (V_{TH1}), and starts the protection processing in response to the absolute value reaching a second threshold (V_{TH2}) larger than the first threshold.

As a result, it is possible to appropriately start the protection processing.

In the fifth aspect, the protection processing includes making phase voltages of a stator coil of the electric motor equal to each other.

As a result, a so-called three-phase short-circuit can be appropriately implemented.

The sixth aspect relates to a vehicle (1), characterized by comprising:
the above-mentioned control device;
a wheel (11);
an electric motor (12) for rotating the wheel; and
a battery unit (16) that generates the first electric power.

That is, the above-described in-vehicle control device is applicable to a typical electric vehicle.

In the seventh aspect, the vehicle further comprises:
a second battery unit (17) that generates the second electric power.

As a result, the second electric power can be appropriately used.

In the eighth aspect, the vehicle further comprises:
a motor driver (14) that receives a control signal from the first control unit and the first electric power and drives the electric motor.

As a result, drive control of the electric motor becomes possible.

In the ninth aspect, the vehicle further comprises:
a start unit (13d) for bringing the vehicle into a starting state, wherein
the second control unit is configured to be able to receive the second electric power in a state in which the start unit allows the vehicle to start.

As a result, the vehicle can be appropriately brought into the starting state in a state in which the start unit allows the vehicle to start.

In the tenth aspect, the second control unit performs drive control of an auxiliary machine on the basis of the second electric power.

As a result, the vehicle can be appropriately brought into the starting state.

In the eleventh aspect, the vehicle is a straddle type vehicle (1).

Since the straddle type vehicle is generally handled in many cases, an appropriate effect can be obtained in any of the above-described aspects.

In the twelfth aspect, the vehicle is a two-wheeled vehicle (1).

Since the two-wheeled vehicle is generally handled in many cases, an appropriate effect can be obtained in any of the above-described aspects.

The invention is not limited to the foregoing embodiments, and various variations/changes are possible within the spirit of the invention.

## Claims

1. A control device **characterized by** comprising:
a first control unit that performs drive control of an electric motor on the basis of first electric power; and
a second control unit that performs predetermined drive control on the basis of second electric power smaller than the first electric power, wherein
the first control unit
performs the drive control of the electric motor by receiving the first electric power and the second electric power, and
in a case of receiving an induced voltage of the electric motor while the first electric power and the second electric power are not received, performs protection processing for protecting a target from the induced voltage on the basis of the induced voltage.

2. The control device according to claim 1, **characterized in that**
the first control unit executes startup processing on the basis of the induced voltage and performs the protection processing on the basis of a result of the startup processing.

3. The control device according to claim 2, **characterized in that**
the startup processing includes determining whether the drive control of the electric motor is possible.

4. The control device according to claim 2 or 3, **characterized in that**
the first control unit starts the startup processing in response to an absolute value of the induced voltage reaching a first threshold, and starts the protection processing in response to the absolute value reaching a second threshold larger than the first threshold.

5. The control device according to any one of claims 1 to 4, **characterized in that**
the protection processing includes making phase voltages of a stator coil of the electric motor equal to each other.

6. A vehicle **characterized by** comprising:
the control device according to any one of claims 1 to 5;
a wheel;
an electric motor for rotating the wheel; and
a battery unit that generates the first electric power.

7. The vehicle according to claim 6, **characterized by** further comprising:
a second battery unit that generates the second electric power.

8. The vehicle according to claim 6 or 7, **characterized by** further comprising:
a motor driver that receives a control signal from the first control unit and the first electric power and drives the electric motor.

9. The vehicle according to any one of claims 6 to 8, **characterized by** further comprising:
a start unit for bringing the vehicle into a starting state, wherein
the second control unit is configured to be able to receive the second electric power in a state in which the start unit allows the vehicle to start.

10. The vehicle according to any one of claims 6 to 9, **characterized in that**
the second control unit performs drive control of an auxiliary machine on the basis of the second electric power.

11. The vehicle according to any one of claims 6 to 10, **characterized in that** the vehicle is a straddle type vehicle.

12. The vehicle according to claim 11, **characterized in that**
the vehicle is a two-wheeled vehicle.
